**Europäisches Patentamt**

**European Patent Office**

**Office européen des brevets**

(19)

(11) Publication number: **0 231 085**
A2

(12)

# EUROPEAN PATENT APPLICATION

(21) Application number: **87300404.8**

(22) Date of filing: **19.01.87**

(51) Int. Cl.³: **F 16 C 3/00**

(30) Priority: **22.01.86 GB 8601547**

(43) Date of publication of application:
**05.08.87 Bulletin 87/32**

(84) Designated Contracting States:
**AT BE CH DE ES FR GB GR IT LI LU NL SE**

(71) Applicant: **WILLIAM ASQUITH (1981) LIMITED**
**Highroad Well Works**
**Halifax West Yorkshire HX2 OAP(GB)**

(72) Inventor: **Harkness, Paul Trevor**
**1 High Meadows Saddleworth Road Greetland**
**Halifax West Yorkshire(GB)**

(74) Representative: **Sherrard-Smith, Hugh et al,**
**Appleyard, Lees & Co. 15 Clare Road**
**Halifax, HX1 2HY West Yorkshire(GB)**

(54) **Machines and housings.**

(57) A housing 10 includes a driven input shaft connected to a driven output shaft 14 by a bevel gear 16.

Under normal operation, such as when the output shaft has a cutting tool associated therewith, rotation of the input shaft 12 causes rotation of the output shaft 14 about a horizontal axis.

In order to index the output shaft, the rotational axis of the output shaft is caused to rotate about the rotational axis of the input shaft by moving a locking plate 44 downwardly into a recess 46 formed in the periphery of the output shaft. Rotation of the input shaft then causes the movement of the output shaft about the rotational axis of the input shaft by virtue of the bevel gear co-operating between the input and output shafts.

FIG.1

## MACHINES AND HOUSINGS.

The present invention relates to housings including an input and an output shaft extending at different angles, and in particular, although not exclusively to such a housing for use in milling machines. In this specification where the word "transversely" is used it is not to be limited to meaning perpendicular and in fact includes any angle other than $0^{\circ}$.

According to one aspect of the present invention, a housing includes a rotary input and output shaft, the axis of the output shaft being capable of being transverse to the axis of the input shaft, rotation of the input shaft, in a first mode, being arranged to cause rotation of the output shaft about the output shaft's rotational axis and, in a second mode, being arranged to move the rotational axis of the output shaft. By allowing the input shaft to cause both rotation of the output shaft about its axis and movement of the rotational axis a relatively simple housing is provided.

In the second mode, rotation of the input shaft may be arranged to move the rotational axis of the output shaft about two transverse axes, each of which is transverse to the rotational axis of the input shaft. In the second mode, the movement of the output shaft may be about a selected one of the transverse axes or it may be arranged to occur simultaneously about both transverse axes.

The housing may include locking means which can be selectively operated to prevent rotation of the output shaft about its axis thereby placing the housing in the second mode. The locking means may include a locking member movable between a first position in which the output shaft may rotate about its axis and a second position in which the output shaft may abut the locking member to prevent rotation of the output member about its axis.

The output shaft may be rotatably mounted on an output portion, which output portion is pivotally mounted on the housing. The output portion may be restrained from pivotal movement in the first mode and may be constrained to move with the output shaft in the second mode. The locking means may be comprised by the output portion.

The output portion may include a slidably mounted portion movable between two positions in one of which the housing is in the first mode and in the other of which the housing is in the second mode. When the housing is in the first mode, the slidably mounted portion may be fast with the housing, and when the housing is in the second mode, the output member may be constrained to move with the output shaft. The slidably mounted portion may be arranged to move in one direction at least under a force exerted by hydraulic fluid pressure. The slidably mounted portion may be resiliantly biased in one direction.

The housing may be arranged to be mounted on a machine, the machine including a rotary member arranged to cause rotation of the input shaft. The housing may be arranged to be detachably mounted on the machine and may be capable of being automatically mounted or released from the machine. The selection of the first or second mode may be arranged to be caused by hydraulic fluid pressure from the machine to the housing. The connection of the hydraulic fluid pressure from the machine to the housing may be arranged to occur automatically upon connection of the housing to the machine. Alternatively, the housing may comprise part of the machine.

The output shaft may be arranged to receive one of a number of cutting tools, and the loading or release of the cutting tools may be arranged to be automatic.

The coupling may be arranged to be accurately aligned with respect to the machine when being mounted thereon, which alignment may be arranged to be provided by a plurality of interengaging portions on both the machine and housing which portion on the machine or housing extend transversely to each other. Any of the parts of the coupling which are displaced relative to each other may be provided with interengaging portions on both parts, which portions on the parts extend transversely to each other whereby, when the portions are brought into engagement their engagement causes the parts to be brought into accurate alignment with each other.

According to a further aspect of the present invention a machine includes a rotary member arranged to receive a cutting tool or to have mounted thereon a housing including a rotary input and output shaft, the axis of the output shaft being capable of being transverse to the input shaft, the rotary member of the machine being arranged to cause rotation of the input shaft when the housing is mounted on the machine, rotation of the input shaft in a first mode being arranged to cause rotation of the output shaft about the output shaft's rotational axis and, in a second mode, being arranged to move the rotational axis of the output shaft. The machine may comprise a milling machine.

In the housing, the rotational axes of the input and output shafts may be generally perpendicular to each other. The movement of the output shaft in the second mode may be arranged to be about the rotational axis of the input shaft. Alternatively or additionally, rotation of the input shaft in the second mode may be arranged to move the rotational axis on the output shaft about two transverse axes, each of which is transverse to the rotational axis of the input shaft. In the second mode, the movement of the output shaft may be about a selected one of the transverse axes or it may be arranged to occur simultaneously about both transverse axes.

The invention may be carried into practice in various ways, but one embodiment will now be described by way of example and with reference to the accompanying drawings, in which:-

Figure 1 is a vertical cross-section through a right angled drive housing;

Figure 2 is a side view in the direction of arrow II on Figure 1, and

Figure 3 is a detail of a proximity sensing device used in the housing.

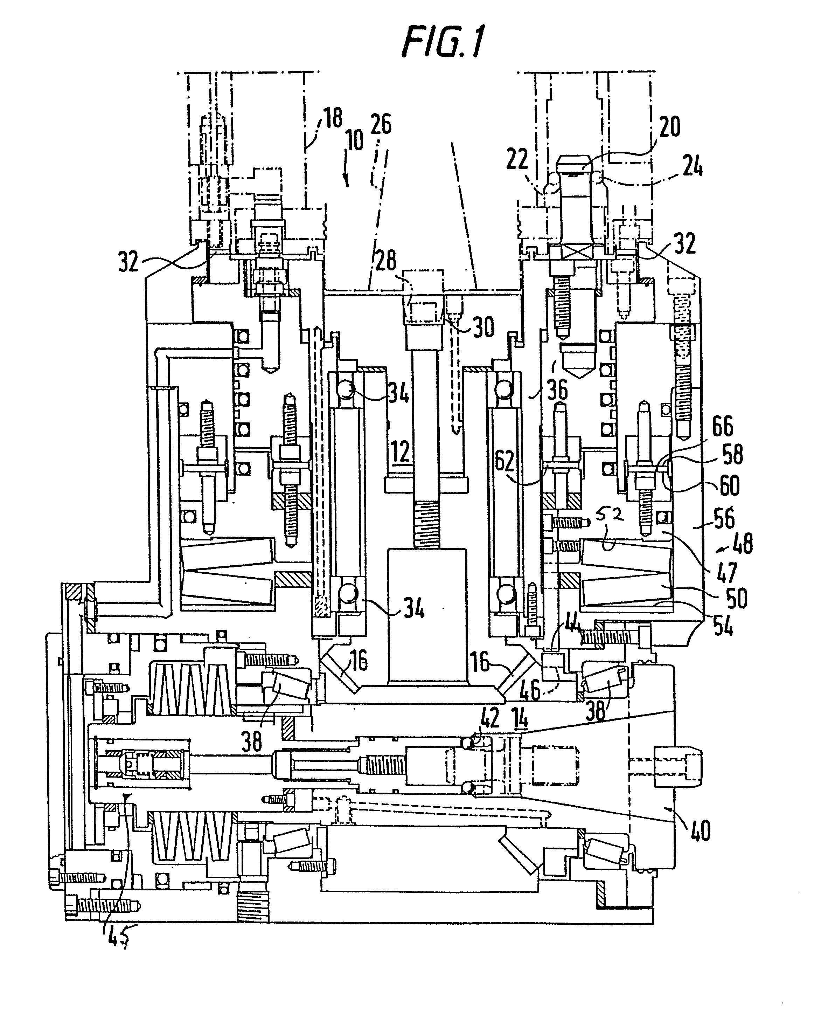

The housing 10 shown in Figure 1 includes a driven input shaft 12 connected to a driven output shaft 14 by a bevel gear 16 whereby, under normal operation, rotation of the input shaft 12 about a vertical axis causes rotation of the output shaft 14 about a horizontal axis.

The housing 10 is arranged to be mounted on the ram 18 (shown in chain lines) of a milling machine by six studs 20 on the top of the housing extending within sockets 22 located on the ram, a ring of balls 24 cooperating with the studs and sockets selectively to pull or hold the studs in the sockets or to release the studs from the sockets to allow the housing to be removed. Each stud and socket may apply a 2 ton holding force to the housing.

A main spindle 26 of the milling machine includes two spaced downwardly depending key drives 28 which are located within corresponding recesses 30 in the upper end of the driven input shaft 12.

In order to ensure that the housing is accurately located on the milling machine, their opposed surfaces are each provided with a ring 32 which together form a multi-toothed coupling. Each ring includes a geared surface with grooves extending radially outwardly, there being 72 teeth in each gear, whereby when the housing is drawn towards the milling machine the teeth cooperate and bring the two parts into precise alignment in two transverse horizontal directions, and eliminate any tilting between the parts.

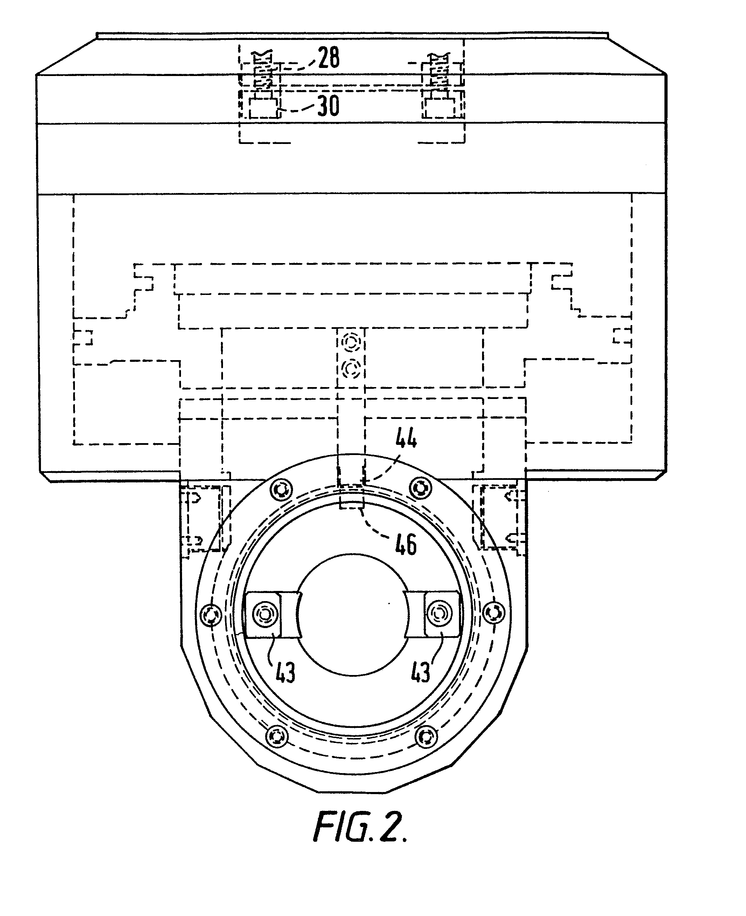

The input shaft 12 is rotatably mounted about a vertical axis about two spaced bearings 34 which are fixed on the inwardly facing surface of a "stator" 36 (the term stator being used to denote that part of the housing which does not move relative to the ram of the milling machine). The lower end of the input shaft is connected to the output shaft 14 by the bevel gear 16, and the output shaft 14 is rotatably mounted about spaced bearings 38. One end of the output shaft 14 includes a tool receiving socket 40 including a locking mechanism 42, and the other end of the shaft 14 has associated therewith a hydraulically operated control mechanism 45 the operation of which will not be described in detail but the function of which is to control the locking mechanism 42. The receiving socket 40 includes two spaced tool mounting portions 43 which must be horizontally aligned, as shown in Figure 2, when a tool is to be picked up or deposited from a tool store.

In a normal machining operation, the input shaft 12 is caused to be rotated by the key drives 28 from the milling machine, the input shaft causing the output shaft 14 and a cutting tool mounted in the socket 40 to be rotated about a horizontal axis.

During a machining operation, or at the start of such an operation, it is necessary to arrange or index the tool to be facing in a particular direction relative to a workpiece mounted on a milling machine. The indexing is achieved by locking the output shaft 14 so that it is unable to rotate about its horizontal axis by moving a locking plate 44 downwardly into a recess 46 formed in the periphery of the output shaft.

To enable the plate 44 to be moved downwardly the plate is located on a sliding part or piston 47 of a rotor 48, the piston 47 normally being biased into the position shown in Figure 1 by disc springs 50 which act between a downwardly facing surface 52 of the piston 47 and an upwardly facing surface 54 of a non-sliding part 56 of the rotor. In order to overcome the force of the disc spring 50, hydraulic fluid is inroduced into an operating chamber 58 of the piston, the fluid pressure acting on an upwardly facing surface 60 of the sliding part 47 to cause the locking plate 44 to move downwardly for a distance of 5 mm whereupon the plate 44 is within the recess 46.

The output shaft can then be indexed by causing rotation of the input shaft, that rotation causing the rotor 48 and output shaft to pivot about a vertical axis. When the output shaft has reached the required indexing position, the hydraulic pressure within the piston chamber 58 is reduced and the disc spring 50 urges the sliding part of the piston upwards into the position shown in Figure 1.

It will be appreciated that in the parts of the coupling which undergo relative movement, some wear may occur between the connecting parts, and manufacturing tolerances may tend to make the relative positions of those parts slightly variable. However, it is extremely important that the relative positions be known precisely, as the drive spindle 26 from the ram of the milling machine is numerically controlled, and that spindle not only controls the actual machining of a work piece, but also the indexing of the output shaft 14. It is also important that, no matter what the indexing position of the output shaft is, the drive spindle can be rotated until the recess 46 in the output shaft is in alignment with the locking plate 44 to allow the output shaft to be further indexed.

In order to ensure that the rotor and stator are in the precise relative angular position required, the rotor and the stator are each provided with a ring 62, located radially inwardly of the piston chamber 58, which, when brought together, form a multi-toothed coupling having gears extending radially outwardly which cooperate to locate accurately the stator and rotor. The gears of the rings include 72 teeth each which allow the output shaft to be indexed at intervals of precisely 5 degrees.

In order to eliminate any slight misalignment which may tend to occur between the parts of the rotor which undergo relative movement (that is the sliding part 47 and the non-sliding part 56), the chamber 58 includes a pair of opposed rings 66 (located radially outwardly of the rings 62) secured to the opposing faces comprising the chamber, which rings together form a multi-toothed coupling having gears which extend radially outwardly. The gears of the rings 66 include 144 teeth each.

A milling machine having an axis of rotation for the tool can be converted into a machine which can have a selected rotational tool axis, by the provision of the housing as described above.

When it is desired to fit the housing during a milling operation, the ram of the milling machine can be located over the housing, and the main shaft of the milling machine rotated until the machine registers that the key drives 28 are opposed to the location of the recesses 30 in the inlet shaft of the housing when the machine last left the housing there. The ram of the milling machine is then lowered onto the studs 20 and the housing held as previously described. The socket of the output shaft of the housing can then be brought into the region of a rotary tool store by the ram of the milling machine and a tool selected and mounted. The indexing and milling operation then proceed and then either the tool is replaced or the housing returned and detached or released from the ram.

It is important that the recess 46 on the output shaft which is arranged to receive the locking plate 44 be accurately aligned therewith when the plate is lowered. However, to avoid damage should the recess not be correctly aligned (due to faulty programming of the numerical control) the hydraulic pressure in the piston chamber 58 is arranged to be only just greater than that required to depress the disc springs 50, at least during the initial movement. Resistance by abutment of the locking plate and the output shaft during the initial movement is sensed and the hydraulic pressure in the piston chamber is not then increased to a higher level. That sensing is achieved by a head 76 and a sensing element 78, the cooperation of which is described below.

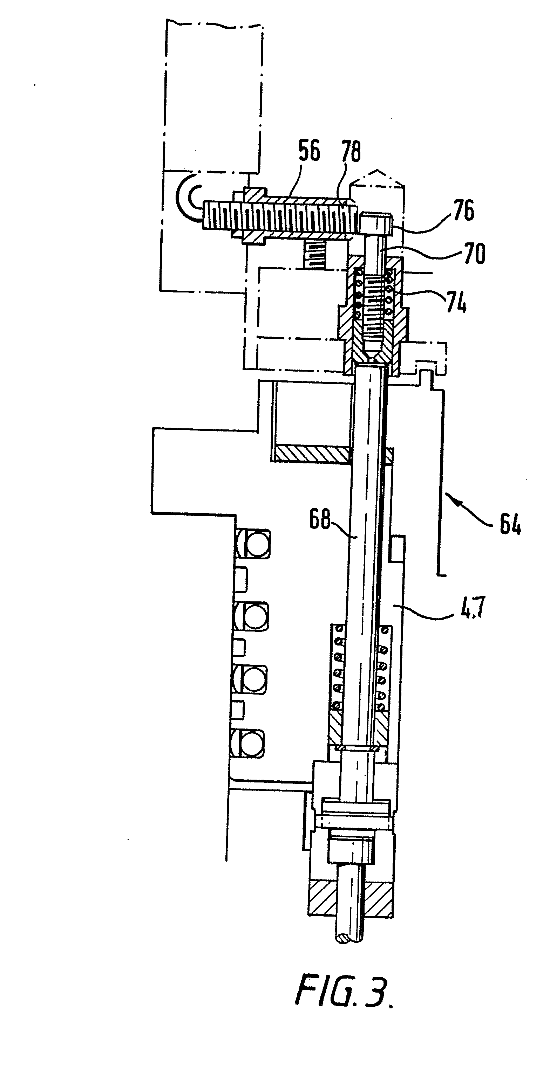

It will be appreciated that the rotation of the main spindle will have two general ranges of speed during operation, one whilst a workpiece is being machined and a lower one whilst the output shaft of the housing is being indexed. In order to detect whether rotation of the main spindle will cause indexing of the output shaft or horizontal rotation of that shaft, a proximity sensing device 64, shown in Figure 3, is mounted between the sliding and non-sliding part 47 and 56 respective of the rotor 48.

A shaft 68 is located in the sliding part 47 and projects therefrom to bias a spigot 70 upwardly, against the action of a spring 74, when the parts 47 and 56 are in the position shown in Figure 1. In that position, the head 76 on the spigot 70 is located at the outlet of the sensing element 78 and the machine is able to sense that the housing is arranged to form a machining operation. When the part 56 is moved downwardly, the shaft 68 and spigot 70 move downwardly until the head 76 is clear of the sensing element and the machine is able to sense that indexing motion is able to occur.

When the housing is connected to the machine, hydraulic fluid supplies are also connected in order to release and secure the tool and in order to be able to cause movement of the other parts of the housing. However, the number of such connections and supplies is limited and there may only be two or three different supplies, one being high pressure (2,000 psi), another being a low pressure or pilot pressure (100 psi) and a medium pressure (1100 psi).

The high pressure and the pilot pressure can be applied to attach and release a tool from the output shaft.

The medium pressure is used during the initial downwards movement of the locking plate 44 towards and into the recess 46, until correct alignment is detected by the head 76 on the spigot 70 moving clear of the sensing element 78, as previously described, and high pressure applied. However, in order to cause the rotational movement of the rotor relative to the stator and in order to overcome the considerable frictional forces created between the seals acting between those parts, a check valve is located between those seals and the piston chamber 58 to allow the pressure in the seals to be relieved and yet still allow pressure to act in the piston chamber. The check valve can be releasable or operable via the pilot pressure.

In an alternative embodiment (not shown) a further bevel gear is arranged to cooperate with the bevel gear 16 at a location remote from the input shaft 12. The further bevel gear is secured with an output shaft and the further bevel gear and output shaft are able to be constrained to rotate about an axis whose position is fixed relative to the housing (for use during a machining operation), or prevented from rotating about its axis (for use in an indexing operation).

In one position, the input shaft and the output shaft on the further bevel gear can be axially aligned and a machining operation can take place in much the same way as in a conventional machine, without the housing. However, the further bevel gear can be locked in an indexing mode whereby rotation of the input shaft causes the output shaft on the further bevel gear to pivot out of alignment with the input shaft up to and including 90° (or possibly even a greater angle) out of alignment therewith. If the bevel gear 16 is then locked in an indexing mode, further rotation of the input shaft causes the output shaft on the further bevel gear to swing around the rotational axis of the input shaft. Thus the output shaft on the further bevel gear can be moved to extend at least in a horizontal direction or vertically downwards and directions therebetween, and in a selected direction extending radially outwardly from the rotational axis of the input shaft.

The means for operating and locking the further bevel gear and output shaft may include similar principles to those employed for the same purpose for the bevel gear 16 and output shaft 14. For example indexing may be achieved by a moving a locking plate to occupy a recess. Each of the operations for locking and releasing the further bevel gear may be arranged to be controlled by hydraulic pressure applied through the connection of the housing to the machine.

## CLAIMS.

1. A housing including a rotary input (12) and output (14) shaft, the axis of the output shaft being capable of being transverse to the axis of the input shaft, rotation of the input shaft, in a first mode, being arranged to cause rotation of the output shaft about the output shaft's rotational axis and, in a second mode being arranged to move the rotational axis of the output shaft.

2. A housing as claimed in Claim 1 in which, in the second mode, rotation of the input shaft is arranged to be capable of moving the rotational axis of the output shaft about two transverse axis, each of which transverse axes are transverse to the rotational axis of the input shaft.

3. A housing as claimed in Claim 2 in which, in the second mode, rotation of the input shaft is arranged to cause movement of the rotational axis of the output shaft about a selected one of the transverse axes.

4. A housing as claimed in Claim 3 in which, in the second mode, rotation of the input shaft is arranged to cause movement of the rotational axis of the output shaft about both transverse axes.

5. A housing as claimed in any preceding claim including locking means (44,46) arranged to be selectively operable to prevent rotation of the output shaft about its rotational axis to place the housing in the second mode.

6. A housing as claimed in Claim 5 in which the locking means includes a locking member (44) movable between a first position, in which the output shaft may rotate about its rotational axis and a second position in which the locking member cooperates with the output shaft to prevent rotation of the output shaft about its rotational axis.

7. A housing as claimed in any preceding claim in which the output shaft is rotatably mounted on an output portion (48), which output portion is pivotally mounted on the housing.

8. A housing as claimed in Claim 7 in which the output portion is restrained from pivotal movement on the housing in the first mode, and is constrained to move with the output shaft in the second mode.

9. A housing as claimed in Claim 5 or 6 and Claims 7 and 8 when dependent on Claims 5 or 6 in which the locking means is comprised by the output portion.

10. A housing as claimed in any of Claims 7 to 9 in which the output portion includes a slidably mounted portion (47) movable between two positions in one of which the housing is in the first mode and in the other of which the housing is in the second mode.

11. A housing as claimed in Claim 10 in which, when the housing is in the first mode, the slidably mounted portion is fast with the housing, and when the housing is in the second mode, the slidably mounted portion is constrained to move with the output shaft.

12.     A housing as claimed in Claim 10 or 11 in which the slidably mounted member is arranged to move in one direction at least under a force exerted by hydraulic fluid pressure.

## FIG.1

FIG.2.

FIG.3.